# EUROPEAN PATENT SPECIFICATION

(11) **EP 3 207 408 B1**
(45) Date of publication and mention of the grant of the patent: **15.06.2022**
(21) Application number: 15797714.1
(22) Date of filing: 19.10.2015
(51) Int. Cl.: G01V 1/20, G01L 1/12, D07B 1/14

(54) **CREEP ALERTING SUPERWIDE**
SUPERBREITES SCHLEPPSEIL MIT KRIECHALARMIERUNG
DISPOSITIF SUPER LARGE D'ALERTE AU FLUAGE

(30) Priority: 17.10.2014 US 201462065610 P
(43) Date of publication of application: 23.08.2017
(73) Proprietor: Hampidjan HF, 104 Reykjavik (IS)
(72) Inventor: ERLENDSSON, Hjortur, IS-201 Kopavogur (IS)
(74) Representative: Arnason Faktor
(86) International application number: PCT/IS2015/050016
(87) International publication number: WO 2016/059652

(56) References cited:
- WO-A2-2009/142766
- WO-A2-2011/009924
- US-B2- 7 441 464

## Description

### Field of Invention:

The present disclosure generally relates to the field of marine seismology, in which a moving ship generates seismic waves and detects reflections, and in particular to improving the reliability of ropes towed by these ships. Yet more specifically the present disclosure relates to seismic lines used by seismic survey vessels to connect to and tow paravanes, deflectors, substitutes for paravanes and deflectors, and to in general tow upon seismic arrays, such lines known generically as "towing warps" and known in the field of seismic surveillance as "wide tow ropes" (also known as "super wides" and "superwide tow warps").

Still more particularly, the present disclosure relates to a particularly constructed and configured superwide tow warp that, when coupled with sensor and an electronic control unit, permits monitoring the magnitude of creep experienced by the superwide tow warp, and in more particularly permits monitoring creep being experienced by distinct portions of the superwide tow warp.

### Definitions:

**"Super Wide"** is a rope used by a vessel at sea or in a water or marine environment to tow upon a towed array and its components, or to tow upon something connected to a towed array and its components or to tow upon something connected to at least a portion of a towed array and its components, such as a paravane and/or deflector. The rope preferably is formed mainly of synthetic fibers, but can include natural fibers such as steel, conductors and other items and even instrumentation. The term **"Super Wide",** the term **"Superwide",** and the term **"Superwide tow warp"** shall have the same meaning.

**"High Tension Sheaves, Drums and Winches"** are sheaves, drums and winches capable of withstanding pressures in excess of fifty-five metric tons, and capable of being employed with ropes that are themselves capable of withstanding tensions in excess of fifty-five metric tons.

### TECHNICAL BACKGROUND AND KNOWN ART

It is well known that most oil companies rely on seismic interpretation to select sites for drilling exploratory oil wells. Seismic data acquisition is routinely performed both on land and at sea. At sea, a seismic ship deploys a streamer or cable behind the ship as the ship moves forward. Multiple receivers are typically towed behind the ship on streamers in an array. Streamers typically include a plurality of receivers. A seismic source is also towed behind the ship, with both the source and receivers typically deployed below the surface of the ocean. Streamers typically include electrical or fiber-optic cabling for interconnecting receivers and seismic equipment on the ship. Streamers are usually constructed in sections 25 to 100 meters in length and include groups of up to 35 or more uniformly spaced receivers. The streamers may be several miles long, and often a seismic ship trails multiple streamers, with a desired uniform lateral separation between the streamers, to increase the amount of seismic data collected. The number and length of streamers to be deployed, as well as the lateral separation to be maintained between streamers, dictates the size of deflectors, or paravanes, that must be deployed with the array, which in turn also has a major impact on the drag load of the seismic ship. The array is ultimately spread apart by lateral forces generated by the deflectors, or paravanes, or their substitutes, that are in turn connected to and towed upon the vessel by superwides, also known as superwide tow warps. Operating at a typical production speed of 4 to 5 knots and towing in excess of 50 tons of instrument-laden equipment in the water, tension on the superwides is both of large magnitude and also of long duration, causing creep of the superwide. That is due to the fact that the superwides are subject to a high tension for long periods of time, the superwides tend to gradually elongate until they eventually break.

When a superwide fails without warning, there is a tremendous imbalance to the towed array systems, resulting in the often miles long streamers and other components of the array tangling. Such events necessitate halting of survey operations and cause substantial downtime and economic loss. Importantly, there also are high safety risks to personnel resultant of unexpected failure of the superwides, with fatalities having occurred.

US Patent 7,441,464 teaches a strain gauge sensor system and method for measuring the strain in a member, such as a fiber rope, where a sensor target assembly is formed of a plastic tube that contains within the hollow cavity of the plastic tube a plurality of magnets spaced apart so as to define individual gauge lengths along the member (e.g. fiber rope), with an RFID tag positioned between adjacent magnets. The preferred embodiment comprises a hollow tube formed of plastic, and within the tube is situated the magnets and RFID tags, and also situated within the hollow tube and occupying the void space not filled by the magnets and RFID tags is silicone. To monitor the change in length of the individual gauge lengths, position and trigger sensor devices are configured spaced apart alongside a desired path of travel of the rope. When the rope is fed along the desired path of travel, the trigger sensor device, in response to magnetically sensing a passing magnet, triggers the position sensor device to read the position of an adjacent passing magnet. The strain in the gauge length is determined from the read position. RFID tags placed on the rope between the magnets can be identified by an RF reader to identify a particular gauge length being measured. The rope taught in US 7,441,464 has failed to solve the problems in the industry described herein and above.

Other methods and apparatuses for using and forming ropes that indicate when a rope is experiencing creep or elongation have also failed to solve the problems described herein and above and have failed to be adopted into the industry for use as superwides.

Hence, there exists a long felt need to improve superwide technology in order to permit advance warning of a compromise to a superwide tow warp's structural integrity, especially to permit monitoring of creep of the superwide tow warp, and concurrent advance warning of likely catastrophic failure of the superwide tow warp.

WO2009/142766 discloses a headline sonar cable having a strength member formed of a hollow braided layer, a solid thermoplastic core and a shielding layer. An electrical conductor is wrapped around the thermoplastic portion.

### Objects of the Present Disclosure:

It is an object of the present disclosure to provide for a superwide tow warp and system that permits detection of creep of the superwide tow warp, as well as monitoring the amount of creep being experienced by the superwide tow warp as a whole, and also monitoring the amount of creep being experienced by distinct portions of the superwide tow warp, prior to the creep causing sufficient destruction of the superwide tow warp to result in failure of the superwide tow warp.

The tow warp J is reliable in applications that require passing through high tension sheaves, and that can tolerate winding upon high tension drums and winches.

The present invention relates to a fiber rope according to claim 1 and to a process for forming a fiber rope according to claim 6.

### Brief Description of the Present Disclosure:

In one preferred embodiment of the present disclosure the problems noted above are solved by incorporating into a braided rope formed of high strength fibers such as UHMWPE a creep alterable core formed of a solid (i.e. not hollow) plastic rod that both fills out the centrally located internal void space that naturally occurs within a strength member constructed from a hollow braided rope and that also includes remotely detectable objects both within the solid plastic rod as well as interspaced at distinct locations positioned along the long dimension of the solid plastic rod. The remotely detectable objects are preferably super magnets, and can be metal objects, magnets, and/or RFIDs. Contrary to the state of the art and against the trend in the industry that is to incorporate either magnets and/or RFIDs within a silicone filled hollow plastic tube not constructed to fill out void spaces internal a strength member formed with a hollow braided construction, the present disclosure is based upon the surprising discovery that by situating the remotely detectable objects within the above taught construction for a solid rod of thermoplastic material and forming a hollow braided strength member about such solid plastic rod that incorporates remotely detectable objects within the solid plastic rod, that a superwide is formed that is able to be effectively monitored for creep while not compromising the breaking strength of the superwide.

The presently preferred fibers for the high strength fibers forming the hollow braided strength member are HMPE and/or UHMWPE. In some instances, HMPE and/or UHMWPE may be usefully combined with aramid, PBO, LCP.

The present disclosure is also based upon the discovery that in order to form the strongest and most reliable superwide a method for incorporating the remotely detectable objects into the solid plastic rod and coupling such with a strength member is best made by first forming a solid thermoplastic rod that is coupled with a plurality of remotely detectable objects situated at interspaced locations along the long dimension of the rod, such as can be accomplished by extruding a solid and not hollow thermoplastic rod about remotely detectable objects, or by situating such remotely detectable objects alongside a thermoplastic rod; and, secondly, subsequently forming a flow shield about the combination of the rod and remotely detectable objects; and, thirdly, subsequently forming with a hollow braided construction a braided strength member about the flow shield containing the combination of the solid rod and remotely detectable objects so that the original outer diameter measured between opposed exterior surfaces of the braided strength member has a minimal original diameter of at least 38mm (thirty-eight mm); and, fourthly, subsequently pre-stretching and applying heat to the combination of the strength member and what it contains (also referred to herein as "the pre-processed rope") so as to cause the thermoplastic material of the rod to become molten (i.e. semi-liquid) and continuing to apply tension to the pre-processed rope while the thermoplastic portion of the rod is molten until the original outer diameter of the strength member is reduced at least 15% and preferably reduced in a range from 15% to 40%, and then cooling the rope construction so as to arrive at a final rope construction where the braided strength member has a final minimal outer diameter that is at least 15% lesser than its original outer diameter (i.e. is at least 15% lesser than the pre-processed rope's original outer diameter), and more preferably is about 33% lesser than its original outer diameter, and has a final outer diameter of at least 31mm (thirty-one mm). Using such method, it has been surprisingly discovered that a superwide containing within itself a structure that includes remotely detectable objects and not having any compromise in breaking strength of the strength member, and that is capable of being deployed for at least six (6) continuous calendar months without experiencing failure is achieved.

The above stated advantages of the present disclosure, as well as other advantages of the present disclosure, no doubt shall become readily apparent to those skilled in the art from the following detailed description of a preferred embodiment including when considered in light of the accompanying drawings in which:

### Brief Description of the Drawings:

FIG. 1 is a top plan and expanded view of the pre-processed rope of creep alerting superwide of the present disclosure where a portion of the strength member has been cut away to reveal the creep alterable core enclosed by the strength member;
FIG. 2 is a side plan view of a portion of the solid plastic rod of FIG. 1 where the creep alterable core has been cut in half along its long dimension, such as in a fillet cut, to reveal the remotely detectable objects contained within the solid plastic rod and other structure of the creep alterable core;
FIG. 3 is a top plan view of an alternative construction of the creep alterable core of FIG. 1 where additional flow shields and additional layer of plastic material are used.
FIG. 4 is a side plan view of an assembly that can be included into the creep alterable core of FIG. 2 and FIG. 3 where the remotely detectable objects have been coupled to a line, such as a filament, string, yarn, thread, tape or the like, prior to being included within or coupled to the solid plastic rod.

### Detailed Description of the Preferred Embodiment:

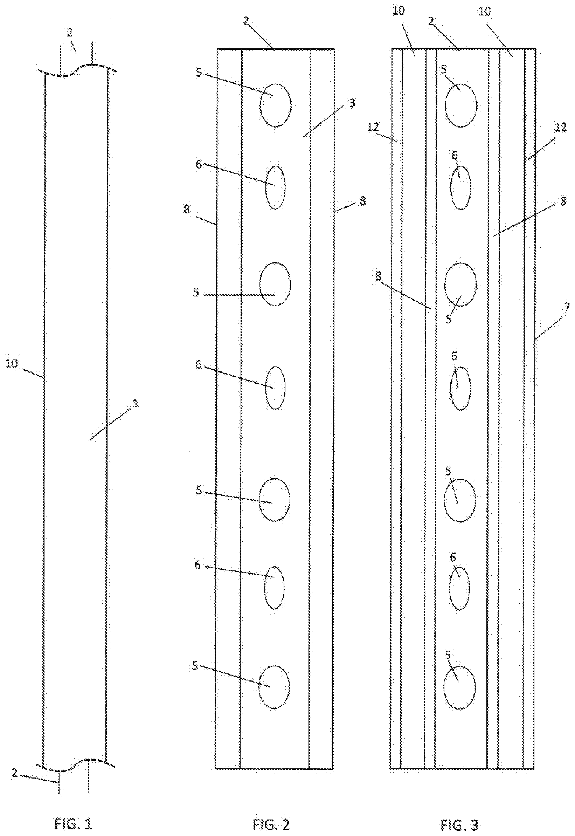

As shown in FIG. 1: the pre-processed phase of the creep alerting superwide 10 of the present disclosure, that is the rope assembly of the present disclosure prior to it's being subjected to the tension and heat processing steps taught herein and above, includes a strength member 1 and a creep alterable core 2. The strength member 1 is formed mainly of synthetic fibers, especially HMPE and/or UHMWPE. The strength member may be enclosed within a cover (not shown), as is preferable, such as may be a tightly braided sheath formed also of HMPE or, in some applications, another suitable synthetic fiber, such a Kevlar^{®}. The cover is applied to the strength member by coverbraiding (i.e. "overbraiding") the strength member after all the tension and heat processing steps are completed and the rope assembly is finally cooled.

The strength member 1 is formed by a hollow braided construction, also known as a hollow braid, and encloses the creep alterable core 2 by being braided around the creep alterable core 2 such as by first forming the creep alterable core 2 and then passing it through a braiding machine designed to form hollow braids, so that the strength member is braided around the creep alterable core. A minimum of twelve (12) carriers are considered useful so as to result in a minimum of twelve (12) primary strands forming the strength member's hollow braided construction.

As shown in FIG. 2, the creep alterable core of FIG. 1 includes a plurality of remotely detectable objects such as preferably are a combination of super magnets 5 and RFID tags 6. The super magnets are preferably permanent magnets formed of neodymium or formed of an alloy of neodymium, iron, and boron to form the Nd₂Fe₁₄B tetragonal crystalline structure, and can be nickel plated. The remotely detectable objects can also be other metal objects and/or other magnets. The creep alterable core preferably includes the RFID tags 6 situated between adjacent super magnets 5. However, in some embodiments the only remotely detectable objects used are super magnets. The solid plastic rod portion 3 of the creep alterable core 2 is formed mainly of thermoplastic material, and preferably entirely of thermoplastic material, preferably Polyethylene (PE). It may be desired in some instances to blend the PE with elastomer, such as from one percent to fifteen percent elastomer. The creep alterable core also includes an outer sheath 8 that forms flow shield sheath 8. The flow shield sheath 8 is formed of any useful construction and material that permits the flow shield sheath 8 to be capable of stopping and/or mainly stopping molten phases of the thermoplastic material from exiting the flow shield sheath 8 at temperatures at which the thermoplastic material is molten, and could be a sleeve, tube, wrapped adhesive tape or the like. Presently, the flow shield sheath 8 preferably is formed of tightly braided polyester threads (including yarns and strands) and/or fibers tightly wrapped and braided around the outer surface of the solid plastic rod, where the flow shield sheath is capable of stopping and/or mainly stopping molten phases of the thermoplastic material from exiting the flow shield sheath (8) at temperatures at which the thermoplastic material is molten.

FIG. 3 shows a construction for an alternative creep alterable core 7 of the present disclosure that is assembled by first forming the creep alterable core 2 of FIG. 2 as taught above and subsequently enclosing the creep alterable core 2 taught in FIG. 2 above within a sleeve of an additional layer 10 of plastic material, that preferably is thermoplastic material, so as to form an outer sleeve 10 of thermoplastic material about flow shield sheath 8, so that outer sleeve 10 thus forms a plastic tube within which is the creep alterable core of FIG. 2; and subsequent to forming outer sleeve plastic layer 10, forming an additional flow shield sheath 12 about outer sleeve plastic layer 10, also preferably of tightly braided polyester threads and/or fibers. The volume selected for the plastic material forming outer sleeve plastic layer 10 preferably is greater than the volume selected for the plastic portion of rod 3. The plastic portion of rod 3 may preferably be a blend of thermoplastic and elastomer, such as from one to fifteen percent elastomer and ninety-nine to eighty-five percent thermoplastic and especially PE, while the outer sleeve plastic layer preferably is either entirely thermoplastic material, or mainly thermoplastic material, with PE being a preferred thermoplastic. In some instances it may be desired to blend PE with elastomer in forming outer sleeve layer 10. However, it is preferred in this instance that the percentage of elastomer in the PE / elastomer blend forming outer sleeve layer 10 is lesser than the percentage of the elastomer in the PE/ elastomer blend forming plastic portion of rod 3.

In both the creep alterable cores 2 and 7 of FIG. 2 and FIG. 3, respectively it is preferred that the remotely detectable objects are either round shaped or oblong in shape. The remotely detectable objects are preferably enclosed in a layer of elastomer or mainly elastomer material capable of tolerating the heat and temperature at which the thermoplastic material of cores 2 and 7 are molten (semi-liquid). For example, the remotely detectable objects may be coated with an elastomer containing substance to form round or oblong shaped objects. The remotely detectable objects may be coated with a thermoplastic or thermoplastic containing substance having a same or, preferably, slightly higher softening temperature than the softening temperature of the thermoplastic substances forming creep alterable cores 2 or 7.

The magnets and any RFIDs and/or other remotely detectable objects can be positioned into the primary core 2, that is preferably a rod of PE or of mainly PE, by injecting them into molten PE that is situated at the head of an extruder of a die used in forming the extruded PE rod. The injection of the remotely detectable objects is accomplished by use of a simple piston and a kind of a magazine pre-loaded with several of the remotely detectable objects. If both super magnets as well as RFID tags are to be injected, then two distinct pistons are used, one for the super magnets and one for the RFID tags. The die and the piston or pistons preferably are formed of metal which is not magnetic. The remotely detectable objects can be injected into the molten PE at the head of the extruder die in a fashion so that alternatively are extruded a super magnet and next an RFID, and then again a magnet and next again an RFID, repeatedly, to result in a series of remotely detectable objects contained within the PE or other thermoplastic rod forming the rod of the creep altering core 2 that alternate between magnets including super magnets and RFIDs.

In order to make a creep alerting superwide of the present disclosure:
Firstly, a creep alterable core 2 or 7 as taught above and herein is formed;
Secondly, the strength member is formed around either the creep alterable structure 2 or 7, depending upon which creep alterable structure was selected to be used. The strength member is formed of a hollow braided construction, and preferably has at least twelve primary strands. This is accomplished by feeding the selected creep alterable core 2 or 7 through a braiding machine designed to form hollow braided ropes, where the braiding machine has at least twelve cars where each car has a bobbin loaded with one of the primary strands used in forming the hollow braided constructed strength member. Preferably the strength member is formed mainly or entirely of synthetic fibers, and preferably HMPE and/or UHMWPE such as described above;
Thirdly, the strength member is dried such as with hot blown air so as to remove excess of moisture from the strength member;
Fourthly, the strength member is submerged or otherwise contacted with an adhesive substance such as a urethane or other substances commonly known in the industry as "impregnating agents", and then dried such as with hot air so as to remove excess of the adhesive substance;
Fifthly, the combination of the strength member and the selected creep alterable core 2 or 7, i.e. the pre-processed rope, are tensed to a predetermined tension;
Sixthly, while maintaining the tension on the pre-processed rope, a heat is applied to the entire pre-processed rope, i.e. to the combination of the strength member and the selected creep alterable core 2 or 7 contained within the strength member, where such heat is applied in such a fashion so as to cause a phase change of the thermoplastic substance forming the thermoplastic portion or portions of the selected creep alterable core 2 or 7, it being preferred to cause the thermoplastic portion to reach only a semi-liquid state, and even a semi-molten state, rather than a totally molten state;
Seventhly, the tension is maintained, and in some cases may be altered, such as increased, followed by being decreased, followed by being increased again, and so on, until the combination of the strength member and the selected creep alterable core 2 or 7 have been stretched and/or elongated a predetermined magnitude (such as a predetermined percentage greater than their length prior to being stretched), and, preferably, until the outer diameter of the strength member is between fifteen percent and forty percent lesser than its original outer diameter;
Eighthly, while a predetermined tension is maintained, the combination of the strength member and the selected creep alterable core 2 are cooled until the thermoplastic substance of the creep alterable core 2 returns to a solid phase.
Ninthly; optionally, and preferably, a sheath is formed about the outside of the strength member, such as a braided sheath, that may be adhered to the strength member with a high elasticity polyurethane that is applied to the outside surface of the strength member with a highly elastic adhesive substance immediately prior to braiding the sheath about the outside surface of the strength member.

In order to use the creep alerting superwide of the present disclosure to monitor and alert operators of excessive or undesired magnitudes of creep in the creep alerting superwide of the present disclosure, the creep alerting superwide of the present disclosure is employed in such a fashion that adjacent to at least a portion of the long dimension of the creep alerting superwide of the present disclosure during its deployment, preferably in the vicinity of the sheave upon which the creep alerting superwide is travelling outboard the seismic vessel, and arranged in sequence and at predetermined spatial distances between one another, are a plurality of sensors capable of detecting the remotely detectable objects. These sensors may be RF readers, or metal detectors, or devices cable of detecting magnets such as by detecting Halls effect. The sensors are connected to an electronic control unit (computer).

Upon initial deployment under working load tensions of the creep alerting superwide of the present disclosure, the sensors detect the positions of the various remotely detectable objects within the creep alerting superwide. These positions are logged by the control unit as predetermined locations having specific distance intervals between themselves along the long dimension of the creep alerting superwide of the present disclosure, each of which specific distance intervals preferably is identifiable by the RFID tag associated with it by virtue of having been positioned between subsequent super magnets or other remotely detectable objects.

In order to ascertain magnitudes of creep of the various distance intervals between the predetermined locations, the positions of the various remotely detectable objects are monitored and the specific distance intervals between them measured and recorded. The control unit keeps record of the distance measured for each of the specific distance intervals over time. When a distance interval elongates, the control until sends an alarm or alert. The control unit is programmed so as to be able to provide a constant report of the progressive creep of the various distance intervals along the long dimension of the superwide.

That portion of the creep alerting superwide in the vicinity of the sheave from which the superwide exits outboard the vessel, and especially between the winch or drum that pulls upon the superwide to just outboard the sheave, is constantly being monitored by an appropriately configured sensor system coupled to the control unit.

When the creep alerting superwide is being payed out or retrieved, it must pass the sensors, that transmit to the control unit information permitting the control unit to monitor creep along those portions of the creep alerting superwide that are far from the sheave.

The control unit calculates creep and/or other elongation experienced by distinct regions corresponding to distinct distance intervals situated along the creep alerting superwide of the present disclosure. When RFIDs are used between subsequent supermagnets, for example, the control unit identifies specific distance intervals through the RFID associated with same. When no RFIDs are used in the creep alterable core, the control unit counts up and down, along the long length of the creep alerting superwide, to thereby keep track of distinct specific distance intervals. Upon sensing a predetermined amount of linear length increase in such distance intervals, the control unit is programmed to send a warning alarm to operators of the seismic surveillance vessel, thereby alerting operators of the likely failure of the creep alerting superwide of the present disclosure prior to such failure occurring as a result of creep. Thus, catastrophic failures of the superwide are avoided, minimizing economic losses and fatalities, the objects of the present disclosure thereby being attained.

### Alternative Embodiments:

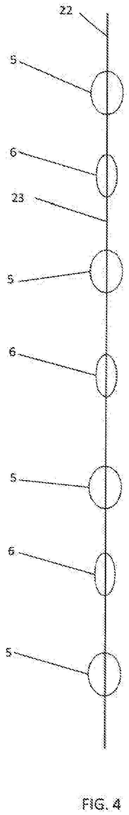

FIG. 4 shows a side plan view of an assembly 22 of spatially arranged remotely detectable objects 5 and 6 coupled to a line 23. The line may be a thread, yarn, filament, tape or other. The line preferably is formed of the same substance that is formed the plastic portion 3 or 10 of the creep alerting cores 2 and 7. The remotely detectable objects may be coupled to the line by means of an adhesive, or any other means. The assembly 22 may be fed through an extruder that is extruding the molten thermoplastic in forming plastic rod 3. This is alternative to using pistons to inject the remotely detectable objects into the head of an extruder die through which is being extruded molten thermoplastic or a blend of molten thermoplastic and other substances to form the plastic portion 3 of creep alterable cores 2 or 7.

According to an embodiment not forming part of the present invention, the process taught herein to make a creep alerting superwide of the present disclosure can be used to make a high strength synthetic rope of the present disclosure for any application for which rope is used, including towing warps, trawler warps, crane ropes, deep sea winch lines, mooring ropes, and other, where the process is the same as taught herein except for the fact that no steps are taken to include remotely detectable objects within the plastic portion 3, and where a core is used that corresponds in construction to creep alterable core 2 lacking any remotely detectable objects.

For example, a process of the present disclosure for forming a high strength rope of the present disclosure other than a creep alerting superwide is as follows:

### Example:

A process for forming a high strength synthetic rope, the process including steps of:
Firstly, forming a rod having at least a solid thermoplastic portion (3);
Secondly, forming a flow shield sheath (8) about the solid thermoplastic rod where the flow shield sheath is capable of stopping and/or mainly stopping molten phases of the thermoplastic material from exiting the flow shield sheath (8) at temperatures at which the thermoplastic material is molten;
Thirdly, forming a hollow braided strength member (10) mainly or entirely of synthetic material and around the combination of the flow shield sheath (8) and the rod having the solid thermoplastic portion (3), the strength member having an original outer diameter, thereby forming a pre-processed rope;
Fourthly, tensing the pre-processed rope to a predetermined tension;
Fifthly, while maintaining the tension on the pre-processed rope, applying a heat to the entire pre-processed rope so as to cause a phase change of the thermoplastic substance forming the thermoplastic portion (3) so as to cause the thermoplastic portion to reach a semi-liquid state;
Sixthly, maintaining the tension until the pre-processed rope has been stretched and/or elongated a predetermined magnitude;
Seventhly, while maintaining a predetermined tension on at least the strength member (10), cooling the pre-processed rope until at least both the strength member and the thermoplastic portion (3) are cooled and the thermoplastic portion (3) returns to a solid phase;
   wherein the fifth step of the process further includes steps of maintaining the tension until the outer diameter of the strength member is between fifteen percent and forty percent lesser than its original outer diameter.

### Industrial Applicability:

The finished rope forming the creep alerting superwide of the present disclosure may also be used as a mooring rope or as a crane rope. As a mooring rope, such as for deep water and ultra deep water rigs, the creep is monitored about sheaves as taught above. However, to monitor creep along submerged portions of the mooring rope it is anticipated than an ROV constructed and configured with the needed sensors and control units to measure and monitor over time the lengths and changes in lengths of the specific distance intervals along the mooring rope would be employed.

Such use, construction and configuration of a creep alerting superwide of the present disclosure is contrary to the trend in the field, has been shown to result in a creep alerting superwide of the present disclosure that addresses problems described herein above and addresses needs long felt in the industry.

## Claims

1. A fiber rope (10) for use in seismic surveillance, the fiber rope having a strength member (1) formed of a hollow braided rope formed mainly of synthetic fibers, the fiber rope also having a solid thermoplastic core, the solid thermoplastic core having a shape that occupies the internal passage formed within the hollow braided strength member and being a creep alterable core (2), the fiber rope further having a flow shield sheath (8) situated between the solid thermoplastic core and the hollow braided strength member, the fiber rope being
**characterized by** the fact that the solid thermoplastic core contains remotely detectable objects that are coupled to the thermoplastic portion (3) of the solid thermoplastic core and that are situated at predetermined locations within the solid thermoplastic core and distributed along the long dimension of the solid thermoplastic core where distance intervals between individual remotely detectable objects lack any remotely detectable object.

2. The fiber rope of claim 1 further **characterized by** the fact that an additional layer of plastic material (10) is situated about and exterior at least the flow shield sheath (8).

3. The fiber rope of claim 2 further **characterized by** the fact that an additional flow shield sheath (12) is situated about and exterior at least the additional plastic layer (10).

4. The fiber rope of clam 3 further **characterized by** the fact that a volume selected for the plastic material forming outer plastic layer (10) preferably is greater than a volume selected for the plastic material forming thermoplastic portion (3).

5. The fiber rope of any one of claims 1 to 4 where the remotely detectable objects include objects selected from a group consisting of:
a) magnets and/or super magnets (5);
b) RFIDs (6); and
c) metal objects.

6. A process for forming a fiber rope, the process including steps of:
firstly, forming a rod having at least a solid thermoplastic portion (3);
secondly, forming a flow shield sheath (8) about the solid thermoplastic rod where the flow shield sheath is capable of stopping and/or mainly stopping molten phases of the thermoplastic material from exiting the flow shield sheath (8) at temperatures at which the thermoplastic material is molten;
thirdly, forming a hollow braided strength member (10) mainly or entirely of synthetic material and around the combination of the flow shield sheath (8) and the rod having the solid thermoplastic portion (3), the strength member having an original outer diameter, thereby forming a pre-processed rope;
fourthly, tensing the pre-processed rope to a predetermined tension;
fifthly, while maintaining the tension on the pre-processed rope, applying a heat to the entire pre-processed rope so as to cause a phase change of the thermoplastic substance forming the thermoplastic portion (3) so as to cause the thermoplastic portion to reach a semi-liquid state;
sixthly, maintaining the tension until the pre-processed rope has been stretched and/or elongated a predetermined magnitude;
seventhly, while maintaining a predetermined tension on at least the strength member (10), cooling the pre-processed rope until at least both the strength member and the thermoplastic portion (3) are cooled and the thermoplastic portion (3) returns to a solid phase;
the process **characterized by**, prior to the second step above, additional steps of coupling with
the thermoplastic portion (3) a plurality of remotely detectable objects situated at predetermined locations distributed along the long dimension of the solid plastic rod where distance intervals between individual remotely detectable objects lack any remotely detectable object.

7. The process of claim 6 further **characterized by** the fact that the fifth step of claim 6 further includes steps of maintaining the tension until the outer diameter of the strength member is between fifteen percent and forty percent lesser than its original outer diameter.

8. The process of any one of claims 6 or 7 further **characterized by** the steps of forming an additional layer (10) of thermoplastic material about and exterior at least the flow shield sheath (8) formed in the second step of claim 6 above, followed by the additional step of forming an additional flow shield sheath (12) about and exterior at least the additional thermoplastic layer (10), prior to the third step of claim 6 above.

## Patentansprüche

1. Faserseil (10) zur Verwendung in der seismischen Überwachung, wobei das Faserseil ein Festigkeitselement (1) aufweist, das aus einem hohlen geflochten Seil gebildet ist, das vorwiegend aus synthetischen Fasern gebildet ist, wobei das Faserseil auch einen festen thermoplastischen Kern aufweist, wobei der feste thermoplastische Kern eine Form aufweist, welche den inneren Durchgang besetzt, der innerhalb des hohlen geflochtenen Festigkeitselements gebildet ist, und ein kriechveränderbarer Kern (2) ist, wobei das Faserseil des Weiteren einen Flussabschirmmantel (8) aufweist, der sich zwischen dem festen thermoplastischen Kern und dem hohlen geflochtenen Festigkeitselement befindet,
wobei das Faserseil durch die Tatsache **gekennzeichnet** ist, dass der feste thermoplastische Kern aus der Ferne detektierbare Objekte enthält, die an den thermoplastischen Anteil (3) des festen thermoplastischen Kerns gekoppelt sind und sich an vorgegebenen Stellen innerhalb des festen thermoplastischen Kerns und entlang der Längsabmessung des festen thermoplastischen Kerns verteilt befinden, wobei Abstandsintervallen zwischen individuellen aus der Ferne detektierbaren Objekten jegliches aus der Ferne detektierbare Objekt fehlt.

2. Faserseil nach Anspruch 1, des Weiteren **gekennzeichnet durch** die Tatsache, dass eine zusätzliche Schicht aus Kunststoffmaterial (10) sich um mindestens den Flussabschirmmantel (8) herum und außerhalb von diesem befindet.

3. Faserseil nach Anspruch 2, des Weiteren **gekennzeichnet durch** die Tatsache, dass ein zusätzlicher Flussabschirmmantel (12) sich um mindestens die zusätzliche Kunststoffschicht (10) herum und außerhalb von dieser befindet.

4. Faserseil nach Anspruch 3, des Weiteren **gekennzeichnet durch** die Tatsache, dass ein Volumen, das für das Kunststoffmaterial gewählt wurde, welches die äußere Kunststoffschicht (10) bildet, vorzugsweise größer als ein Volumen ist, das für das Kunststoffmaterial gewählt wurde, welches den thermoplastischen Anteil (3) bildet.

5. Faserseil nach einem der Ansprüche 1 bis 4, wobei aus der Ferne detektierbare Objekte Objekte ausgewählt aus einer Gruppe einschließen, die aus Folgendem besteht:
a) Magneten und/oder Supermagneten (5);
b) RFIDs (6) und
c) Metallobjekten.

6. Verfahren zur Bildung eines Faserseils, wobei das Verfahren die Schritte einschließt:
erstens Bilden eines Stabs mit mindestens einem festen thermoplastische Anteil (3);
zweitens Bilden eines Flussabschirmmantels (8) um den festen thermoplastischen Stab herum, wobei der Flussabschirmmantel in der Lage ist, zu stoppen und/oder überwiegend zu stoppen, dass geschmolzene Phasen des thermoplastischen Materials bei Temperaturen, bei denen das thermoplastische Material geschmolzen ist, aus dem Flussabschirmmantel (8) austreten;
drittens Bilden eines hohlen geflochtenen Festigkeitselements (10) überwiegend oder ganz aus synthetischem Material und um die Kombination des Flussabschirmmantels (8) und des Stabs mit dem festen thermoplastische Anteil (3) herum, wobei das Festigkeitselement einen ursprünglichen Außendurchmesser hat, wodurch ein vorverarbeitetes Seil gebildet wird;
viertens Spannen des vorverarbeiteten Seils auf eine vorgegebene Zugspannung;
fünftens, während die Zugspannung auf dem vorverarbeiteten Seil aufrechterhalten wird, Anwenden von Wärme auf das ganze vorverarbeitete Seil, um so einen Phasenwechsel der thermoplastischen Substanz zu bewirken, die den thermoplastischen Anteil (3) bildet, um so zu bewirken, dass der thermoplastische Anteil einen halbflüssigen Zustand erreicht;
sechstens Aufrechterhalten der Zugspannung, bis das vorverarbeitete Seil um eine vorgegebenen Betrag gereckt und/oder gedehnt worden ist;
siebtens, während eine vorgegebene Zugspannung auf mindestens dem Festigkeitselement (10) aufrechterhalten wird, Kühlen des vorverarbeiteten Seils, bis mindestens sowohl das Festigkeitselement als auch der thermoplastische Anteil (3) gekühlt sind und der thermoplastische Anteil (3) zu einer festen Phase zurückkehrt;
wobei das Verfahren durch zusätzliche Schritte des Koppelns einer Vielzahl von aus der Ferne detektierbaren Objekten, die sich an vorgegebenen Stellen entlang der Längsabmessung des festen Kunststoffrohrs verteilt befinden, mit dem thermoplastischen Anteil (3) vor dem zweiten obigen Schritt gekennzeichnet ist, wobei Abstandintervallen zwischen individuellen aus der Ferne detektierbaren Objekten jegliches aus der Ferne detektierbare Objekt fehlt.

7. Verfahren nach Anspruch 6, des Weiteren **gekennzeichnet durch** die Tatsache, dass der fünfte Schritt von Anspruch 6 des Weiteren Schritte des Aufrechterhaltens der Zugspannung einschließt, bis der Außendurchmesser des Festigkeitselements zwischen fünfzehn Prozent und vierzig Prozent unter seinem ursprünglichen Außendurchmesser liegt.

8. Verfahren nach einem der Ansprüche 6 oder 7, des Weiteren **gekennzeichnet durch** die Schritte des Bildens einer zusätzlichen Schicht (10) aus thermoplastischem Material um mindestens den Flussabschirmmantel (8) herum und außerhalb von diesem, der in dem zweiten Schritt des obigen Anspruchs 6 gebildet wurde, gefolgt von dem zusätzlichen Schritt des Bildens eines zusätzlichen Flussabschirmmantels (12) um mindestens die zusätzliche thermoplastische Schicht (10) herum und außerhalb von dieser vor dem dritten Schritt des obigen Anspruchs 6.

## Revendications

1. Filin textile (10) à utiliser dans la surveillance sismique, le filin textile ayant un élément de renfort (1) constitué d'un filin tressé creux principalement constitué de fibres synthétiques, le filin textile ayant également une âme thermoplastique pleine, l'âme thermoplastique pleine ayant une forme qui occupe le passage interne formé à l'intérieur de l'élément de renfort tressé creux et étant une âme altérable au fluage (2), le filin textile ayant en outre une gaine faisant barrière aux écoulements (8) située entre l'âme thermoplastique pleine et l'élément de renfort tressé creux, le filin textile étant **caractérisé par le fait que** l'âme thermoplastique pleine contient des objets détectables à distance qui sont couplés à la partie thermoplastique (3) de l'âme thermoplastique pleine et qui sont situés à des emplacements prédéterminés à l'intérieur de l'âme thermoplastique pleine et répartis le long de la dimension de la longueur de l'âme thermoplastique pleine où des intervalles de distance entre objets détectables à distance individuels sont dépourvus de tout objet détectable à distance.

2. Filin textile de la revendication 1 **caractérisé en outre par le fait qu'**une couche supplémentaire de matériau plastique (10) est située autour et à l'extérieur au moins de la gaine faisant barrière aux écoulements (8).

3. Filin textile de la revendication 2 **caractérisé en outre par le fait qu'**une gaine faisant barrière aux écoulements supplémentaire (12) est située autour et à l'extérieur au moins de la couche de plastique supplémentaire (1).

4. Filin textile de la revendication 3 **caractérisé en outre par le fait qu'**un volume sélectionné pour le matériau plastique formant la couche de plastique externe (10) est de préférence supérieur à un volume sélectionné pour le matériau plastique formant la partie thermoplastique (3).

5. Filin textile de l'une quelconque des revendications 1 à 4 dans lequel les objets détectables à distance incluent des objets choisis dans un groupe constitué par :
a) des aimants et/ou superaimants (5) ;
b) des RIFD (6) ; et
c) des objets métalliques.

6. Procédé de formation d'un filin textile, le procédé comportant les étapes suivantes :
premièrement, formation d'une tige ayant au moins une partie thermoplastique pleine (3) ;
deuxièmement, formation d'une gaine faisant barrière aux écoulements (8) autour de la tige thermoplastique pleine, la gaine faisant barrière aux écoulements pouvant empêcher et/ou en grande partie empêcher des phases fondues du matériau thermoplastique de sortir de la gaine faisant barrière aux écoulements (8) à des températures auxquelles le matériau thermoplastique est fondu ;
troisièmement, formation d'un élément de renfort tressé creux (10) principalement ou entièrement en matériau synthétique et autour de la combinaison de la gaine faisant barrière aux écoulements (8) et de la tige ayant la partie thermoplastique pleine (3), l'élément de renfort ayant un diamètre externe initial, pour former ainsi un filin prétraité ;
quatrièmement, mise en tension du filin prétraité jusqu'à une tension prédéterminée ;
cinquièmement, tout en maintenant la tension sur le filin prétraité, application de chaleur au filin prétraité entier de manière à provoquer un changement de phase de la substance thermoplastique formant la partie thermoplastique (3) de manière à faire atteindre à la partie thermoplastique un état semi-liquide ;
sixièmement, maintien de la tension jusqu'à ce que le filin prétraité ait été étiré et/ou allongé sur une amplitude prédéterminée ;
septièmement, tout en maintenant une tension prédéterminée au moins sur l'élément de renfort (10), refroidissement du filin prétraité jusqu'à ce qu'à la fois l'élément de renfort et la partie thermoplastique (3) soient refroidis et la partie thermoplastique (3) retourne à une phase solide ;
le procédé étant **caractérisé par**, avant la deuxième étape ci-dessus, des étapes supplémentaires de couplage avec
la partie thermoplastique (3) d'une pluralité d'objets détectables à distance situés à des emplacements prédéterminés répartis le long de la dimension de la longueur de la tige de plastique pleine où des intervalles de distance entre objets détectables à distance individuels sont dépourvus de tout objet détectable à distance.

7. Procédé de la revendication 6 **caractérisé en outre par le fait que** la cinquième étape de la revendication 6 comporte en outre des étapes de maintien de la tension jusqu'à ce que le diamètre externe de l'élément de renfort soit inférieur de quinze pour cent à quarante pour cent à son diamètre extérieur initial.

8. Procédé de l'une quelconque des revendications 6 et 7 **caractérisé en outre par** les étapes de formation d'une couche supplémentaire (10) de matériau thermoplastique autour et à l'extérieur au moins de la gaine faisant barrière aux écoulements (8) formée dans la deuxième étape de la revendication 6 ci-dessus, suivie par l'étape supplémentaire de formation d'une gaine faisant barrière aux écoulements supplémentaire (12) autour et à l'extérieur au moins de la couche thermoplastique supplémentaire (10), avant la troisième étape de la revendication 6 ci-dessus.
